# EUROPÄISCHE PATENTANMELDUNG

(11) **EP 4 036 798 A1**
(43) Veröffentlichungstag der Anmeldung: **03.08.2022**
(21) Anmeldenummer: 21153662.8
(22) Anmeldetag: 27.01.2021
(51) Int. Cl.: G06K 9/62, G06K 9/32, G06N 3/04, G06N 3/08

(54) **COMPUTER-IMPLEMENTIERTES VERFAHRENS ZUR AUTOMATISCHEN KLASSIFIKATION VON EMITTER-STRUKTUREN, VORRICHTUNG ZUR DURCHFÜHRUNG DES VERFAHRENS, MASCHINENLESBARER PROGRAMMCODE UND SPEICHERMEDIUM**

(71) Anmelder: Siemens Healthcare GmbH, 91052 Erlangen (DE); Friedrich-Alexander-Universität Erlangen-Nürnberg, 91054 Erlangen (DE)
(72) Erfinder: Fürst, Jens, 91074 Herzogenaurach (DE); Lutz, Benjamin Samuel, 81739 München (DE); Selmaier, Andreas, 91052 Erlangen (DE)

(57) **Zusammenfassung**

Die Erfindung betrifft eine Vorrichtung, maschinenlesbaren Programmcode, ein Speichermedium und computer-implementiertes Verfahren (100) zur automatischen Klassifikation (103) von zur Emission von Elektronen für die Erzeugung von Röntgenstrahlen ausgebildeten Emitter-Strukturen (E), wobei die Klassifikation auf Grundlage eines herangezogenen Bilds einer Emitter-Struktur (E) erfolgt (103), wobei die Klassifikation eine erste Klasse (K1) und wenigstens eine zweite Klasse umfasst (K2, KN), wobei die erste Klasse (K1) einer im Wesentlichen defektfreien Emitter-Struktur (E) und die wenigstens eine zweite Klasse (K2, KN) einer defektbehafteten Emitter-Struktur entspricht. Indem zur Klassifikation ein als Fusionsbild (I) aus einem Hellfeld-Bild und einem Dunkelfeld-Bild ausgestaltetes Bild (102) herangezogen wird und die Klassifikation (103) der Emitter-Struktur (E) in die erste und die zweite Klasse (K1, K2, KN) anhand dieses Bilds (I) mittels eines zur Klassifikation (103) der Emitter-Struktur (E) trainierten künstlichen neuronalen Netzwerks (30) zur Klassifikation (103) der Emitter-Struktur (E) erfolgt und wobei ein Signal zur Ausgabe der mittels der Klassifikation (103) ermittelten Klasse (K1, K2, KN) für die Emitter-Struktur (E) erzeugt (105) wird, kann eine verbesserte Defektüberprüfung von Emitter-Strukturen bereitgestellt werden.

## Beschreibung

Die Erfindung betrifft ein Computer-implementiertes Verfahrens zur automatischen Klassifikation von zur Emission von Elektronen zur Erzeugung von Röntgenstrahlen ausgebildeten Emitter-Strukturen, wobei die Klassifikation auf Grundlage eines herangezogenen Bilds einer Emitter-Struktur erfolgt, wobei die Klassifikation eine erste Klasse und wenigstens eine zweite Klasse umfasst, wobei die erste Klasse einer im Wesentlichen defektfreien Emitter-Struktur und die wenigstens eine zweite Klasse einer defektbehafteten Emitter-Struktur entspricht. Ferner betrifft die Erfindung eine Vorrichtung zur Durchführung des Verfahrens, sowie maschinenlesbaren Programmcode und ein Speichermedium mit maschinenlesbarem Programmcode zur Durchführung des Verfahrens.

Zur Erzeugung von Röntgenstrahlen werden verschiedene Ansätze erfolgt. Für das Erzeugen von Röntgenstrahlen, insbesondere für den medizinischen Einsatz, werden typischerweise Elektronen auf eine Anode beschleunigt werden. Durch Wechselwirkung der beschleunigten Elektronen mit der Anode entsteht Röntgenstrahlung. Für die Qualität der entstehenden Röntgenstrahlung ist die Bereitstellung der dafür genutzten Elektronen von Bedeutung.

Elektronen zur Erzeugung von Röntgenstrahlen werden mittels eines Emitters bereitgestellt, welcher Elektronen zur Erzeugung von Röntgenstrahlen emittieren.

Häufig werden die Elektronen mittels thermischer Emission erzeugt, z.B. mittels thermionischer Emitter, wie einem Heizdraht oder mittels eines durch elektrischen Stromfluss erhitzbaren Flachemitters. Entsprechende Flachemitter sind bspw. in DE 10 2010 020 151 A1 oder DE 10 2006 018 633 A1 beschrieben.

Der die Emissionsfläche bildende Teil des Flachemitters umfasst in der Regel eines oder mehrere dünnen Bleche, die aus einem hochtemperaturbeständigen Metall wie Wolfram hergestellt sind. Um Emission in einem definierten Bereich der Blechfläche zu erhalten, muss der Flachemitter auf eine hohe Temperatur von ca. 2000-2500 Grad Celsius aufgeheizt werden. Dies geschieht mittels eines elektrischen Stroms und dem intrinsischen elektrischen Widerstand des Emitter-Materials.

Um einen definierten ohmschen Widerstand zu erreichen, ist das Blechmaterial i.d.R. strukturiert, indem möglichst genaue Schnitte oder Schlitze eingebracht werden. Das Emitterblech eines derartigen thermionischen Flachemitters ist mit Heizstromanschlüssen versehen, über die ein Heizstrom durch das Emitterblech geleitet wird. Bedingt durch die hohe Temperatur, auf die das Emitterblech geheizt wird, werden Elektronen aus dem Emitterblech emittiert und mittels einer Hochspannung zu einer Anode hin beschleunigt.

Auf dem Weg vom Emitterblech zur Anode werden die emittierten Elektronen über ein Fokussierungssystem fokussiert. Beim Auftreffen der Elektronen auf der ebenfalls aus einem hochtemperaturbeständigen Material, wie etwa Wolfram, gefertigten Anode in einem Brennfleck entsteht durch das Abbremsen der Elektronen im Anodenmaterial Röntgenstrahlung.

Vermehrt kommen auch Feldeffekt-Emitter zum Einsatz, bei welchen Elektronen mittels Feldeffekt aus der Kathode emittiert werden. Häufig umfassen diese nadelförmige Strukturen, z.B. aus dem Material Silizium, Siliziumcarbid oder aus Carbon Nano Tubes. Durch entsprechende elektrische Feldstärken an den Nadelspitzen werden Elektronen aus den Emitter-Strukturen herausgelöst. Diese Emission von Elektronen kann bei Feldeffekt-Emittern zudem thermisch unterstützt werden. Diese werden dann ebenfalls in gewünschter Weise auf eine Anode beschleunigt.

Sämtliche Emitter zur Erzeugung von Elektronen, welche für die Erzeugung von Röntgenstrahlen vorgesehen sind, weisen somit Emitter-Strukturen auf, welche die Funktionsfähigkeit des Emitters beeinflussen.

Maßgeblich für eine gutes Emissionsverhalten eines Emitters ist, dass die Herstellung des Emitters möglichst defektfrei erfolgt. Defekte in den Emitter-Strukturen führen häufig zu einem späteren Bauteilversagen, zu einer geringeren Emissions-Effizienz oder unerwünschten Elektronenverteilung bei der Emission, was sich auf die Qualität der damit erzeugten Röntgenstrahlung nachteilig auswirkt.

Bisher werden die Emitter manuell von entsprechendem Personal auf Defektfreiheit geprüft. Dies ist personalaufwändig, langwierig und unzuverlässig, da die Identifikation von Defekten im Ermessen und in der Erfahrung individueller Personen liegt. Insbesondere hängt das Erkennen von Defekten vom Konzentrationszustand der prüfenden Person ab.

Aufgrund des hohen Aufwands werden Emitter-Bauteile häufig erst bei vorliegendem Defekt untersucht, um die Ursache für den Ausfall des Bauteils zu eruieren. Eine Prüfung von hergestellten Emittern, insbesondere aller hergestellter Emitter, erfolgt vor dem Inverkehrbringen aufgrund des Aufwands ebenfalls in der Regel nicht durchgängig.

Aufgabe der vorliegenden Erfindung ist es daher, ein Verfahren, eine Vorrichtung, maschinenlesbaren Programmcode bzw. ein Speichermedium mit maschinenlesbarem Programmcode bereitzustellen, mit dem eine Defektüberprüfung von Emitter-Strukturen verbessert werden kann.

Die Aufgabe wird gelöst durch den Gegenstand der unabhängigen Ansprüche.

Insbesondere wird die Aufgabe mittels eines computerimplementierten Verfahrens zur automatischen Klassifikation von Emitter-Strukturen zur Emission von Elektronen gelöst, wobei die Klassifikation auf Grundlage eines herangezogenen Bilds einer Emitter-Struktur erfolgt, wobei die Klassifikation eine erste Klasse und wenigstens eine zweite Klasse umfasst, wobei die erste Klasse einer im Wesentlichen defektfreien Emitter-Struktur und die wenigstens eine zweite Klasse einer defektbehafteten Emitter-Struktur entspricht, wobei zur Klassifikation ein als Fusionsbild aus einem Hellfeld-Bild, insbesondere aus einem Hellfeld-Mikroskop-Bild, und einem Dunkelfeld-Bild, insbesondere einem Dunkelfeld-Mikroskop-Bild, ausgestaltetes Bild herangezogen, insbesondere empfangen, wird und die Klassifikation der Emitter-Strukturen in die erste und die zweite Klasse, d.h. die Zuordnung von Emitter-Strukturen in die jeweilige Klasse, anhand dieses Bilds mittels eines zur Klassifikation der Emitter-Struktur trainierten künstlichen neuronalen Netzwerks zur Klassifikation der Emitter-Struktur erfolgt, wobei ein Signal zur Ausgabe der mittels der Klassifikation ermittelten Klasse für die Emitter-Struktur erzeugt wird.

Das computerimplementierte Verfahren erlaubt eine automatisierte Überprüfung von Emitter-Strukturen auf das Nicht-Vorliegen bzw. Vorliegen von defekten Emitter-Strukturen in effektiver und effizienter Weise. Insbesondere können abhängig vom Anlernvorgang des neuronalen Netzes verschiedenen Defektarten unterschieden werden. Diese Lösung erlaubt zudem eine kontinuierliche und vollständige Prüfung von Emittern im Rahmen eines Fertigungsprozesses. Gegenüber dem Stand der Technik ist das erfindungsgemäße Verfahren zuverlässiger, schneller und objektiv ausführbar. Dies kann bspw. automatisiert für jeden aus einer Fertigung auslaufenden Emitter erfolgen oder auch als Kontrollschritt während des Fertigungsprozesses.

Das Verfahren kann über eine Netzwerkanwendung ausgeführt werden, z.B. web-basiert oder cloud-basiert, oder lokal auf einer entsprechenden Vorrichtung, z.B. einer Testvorrichtung, im Rahmen einer Fertigungsüberprüfung.

Wenn das Verfahren lokal ausführt wird, also innerhalb z.B. eines Unternehmensnetzwerks oder von einer Defektprüfungsvorrichtung in einer Fertigung, kann optional das Verfahren der Bildaufnahme eines Hellfeld-Bilds, eines Dunkelfeld-Bilds und der Erzeugung eines Fusionsbilds aus Hellfeld-Bild und Dunkelfeld-Bild ein Verfahrensschritt des Verfahrens sein.

Bei Anwendung des Verfahrens über ein Netzwerk, insbesondere als cloudbasierte Anwendung, können das Hellfeld-Bild und das Dunkelfeld-Bild der Emitter-Strukturen separat bereitgestellt werden, oder auch das daraus kombinierte Fusionsbild.

Die Aufnahme des Hellfeld-Bilds und des Dunkelfeld-Bilds derselben Emitter-Strukturen kann bspw. mittels eines Mikroskops bei geeigneter Vergrößerung erfolgen, so dass die Emitter-Strukturen ausreichend optisch aufgelöst bzw. sichtbar sind. Vorzugsweise können sämtliche für die Emission von Elektronen relevanten Emitter-Strukturen des Emitters sukzessive mittels Hellfeld-Bild und Dunkelfeld-Bild erfasst werden, so dass der gesamte Emitter auf Defekte automatisiert analysiert werden kann.

Wird kein Fusionsbild bereitgestellt, kann das Verfahren optional auch die Erzeugung des Fusionsbilds aus dem Hellfeld-Bild und dem Dunkelfeld-Bild umfassen. In diesem Fall wird vor der Klassifikation noch eine Datenaufbereitungsschritt in Form der Erzeugung des Fusionsbilds aus dem Hellfeld-Bild und dem Dunkelfeld-Bild derselben Emitter-Struktur vorgenommen.

Wesentlich ist jedoch, dass die Klassifikation der Emitter-Strukturen mittels des künstlichen neuronalen Netzes auf Grundlage des Fusionsbilds aus einem Hellfeld-Bild und einem Dunkelfeld-Bild derselben Emitter-Struktur erfolgt. Das Fusionsbild bildet die Grundlage für die Klassifikation. Dabei kann die Klassifikation mittels des Fusionsbilds selbst erfolgen oder es kann eine Vorverarbeitung des Fusionsbilds durchgeführt werden und dann die Klassifikation mittels des vorverarbeiteten Fusionsbilds erfolgen.

Erst auf Basis dieser Kombination von Hellfeld-Bild und Dunkelfeld-Bild der Emitter-Strukturen kann eine Klassifikation der Emitter-Strukturen erfolgen, die zufriedenstellende bzw. gute Ergebnisse im Hinblick auf die Defektbestimmung liefert.

Unter einem Fusionsbild wird ein Kombinationsbild aus Hellfeld-Bild bzw. Hellfeld-Aufnahme und Dunkelfeld-Bild bzw. Dunkelfeld-Aufnahme derselben Emitter-Strukturen verstanden. Insbesondere werden die Kanäle, insbesondere Farbkanäle, der jeweiligen Bilder kombiniert. Zum Beispiel bei einem dreikanaligen Hellfeld-Bild und einem dreikanaligen Dunkelfeld-Bild wird das Fusionsbild so zu einem sechskanaligen Bild, nämlich jeweils aus den drei Kanälen des Hellfeld-Bilds bzw. des Dunkelfeld-Bilds, kombiniert. Es können auch mehr oder weniger als 3 Farbkanäle pro Bild vorgesehen werden. Insbesondere kann als Hellfeld-Bild auch ein 1 kanaliges Hellfeld-Bild, insbesondere als Graustufenbild, und als Dunkelfeld-Bild ein 1 kanaliges Dunkelfeld-Bild, insbesondere als Graustufenbild, verwendet werden. In diesem Fall weist das Fusionsbild dann zwei Kanäle auf. Indem ein nur zweikanaliges Fusionsbild verwendet wird, wird die Durchführungsgeschwindigkeit für die Klassifikation erhöht. Auch ist nur ein Trainingsdatensatz geringerer Größe erforderlich.

Der Begriff der Emitter-Strukturen umfasst insbesondere Flachemitter-Strukturen als auch Feldeffekt-Emitter-Strukturen.

Es wird nach erfolgter Klassifikation ein Ausgabe-Signal erzeugt, auf dessen Grundlage das Klassifikationsergebnis, z.B. über eine Sendeschnittstelle, weiterverwertbar, insbesondere anzeigbar, speicherbar oder mittels einer weiteren Routine weiterverarbeitbar, ist. Die Anzeige kann dabei an einem beliebigen Ort erfolgen, insbesondere wenn die Klassifikation mittels einer Cloudanwendung erfolgt. Vorzugsweise kann dieses Signal, wie erhalten oder nachbearbeitet, in einer Überwachungseinrichtung für eine Fertigungsstätte für Emitter wiedergegeben werden, um den Fertigungsprozess zu überwachen.

Wird das computerimplementierte Verfahren lokal ausgeführt, kann dieses auch den Verfahrensschritt des Ausgebens, insbesondere des Anzeigens, der Klassifikation für die Emitter-Strukturen umfassen.

Der Begriff der ersten und zweiten Klassen dienen lediglich zur Unterscheidbarkeit der Klassen und definieren insbesondere keine Reihenfolge der Klassen.

Die erste Klasse, welche einer defektfreien Emitter-Struktur entspricht, kann als explizite Klasse des künstlichen neuronalen Netzes vorgesehen sein. Allerdings kann diese erste Klasse auch als implizite Klasse des neuronalen Netztes ausgebildet sein. In letzterem Fall werden dieser ersten Klasse alle Pixel zugeordnet, die mittels des neuronalen Netztes keiner der zweiten, dritten, vierten, usw., als der vorhandenen Defektklassen, welche auch eine Klasse "sonstige Defekte" umfassen kann, zugeordnet werden können bzw. zuordenbar sind.

In einer Ausführungsform der Erfindung erfolgt die Klassifikation mittels eines künstlichen, zur Klassifikation der Emitter-Struktur trainierten tiefen neuronalen Netzwerks bzw. Deep Neural Networks, insbesondere eines Convolutional Neuronal Networks. Es hat sich gezeigt, dass ein Convolutional Neuronal Network, welches in deutscher Sprache als faltendes neuronales Netz bezeichnet werden kann, insbesondere trainiert mittels supervised learning bzw. überwachtes Lernen auf Basis bekannter Emitter-Strukturen und deren bekannte Defekte, gute Ergebnisse für eine defektbezogene Klassifikation von Emitter-Strukturen erzielt. Die dabei vom Convolutional Neural Network angewendeten Filter sind vorzugsweise nicht manuell vorgegeben, sondern während des Trainings des neuronalen Netzes erlernt worden.

Das Convolutional Neural Network kann insbesondere drei Convolutional Layer aufweisen, wobei die ersten Convolutional Layer bspw. 32 Filter, die zweite Convolutional Layer 64 Filter und die dritte Convolutional Layer 128 Filter aufweist. Vorzugsweise wird mit einer Filteranzahl für die ersten Convolutional Layer begonnen, z.B. 8, 16 oder 32, die dann um den Faktor 2 für jede weitere vorhandene Convolutional Layer erhöht wird. Insbesondere kann für jede Convolutional Layer eine Aktivierungsfunktion, bspw. eine relu-Aktivierungsfunktion, wobei "relu" ein Akronym ist für Rectified Linear Unit, vorgesehen werden, so dass nur Werte weitergegeben werden, die einen Schwellwert überschreiten.

Es können auch nur eine einzige Convolutional Layer oder auch zwei, vier, fünf oder mehr Convolutional Layer vorgesehen werden. Abhängig von den verfügbaren Trainingsdaten verbessert sich das Klassifikationsergebnis in der Regel mit der Zunahme der Anzahl an Convolutional Layern bzw. Faltungsebenen. Dabei kann die Filteranzahl für jede Convolutional Layer um den Faktor 2 erhöht werden, beginnend bspw. mit 32 Filtern für eine erste Convolutional Layer. Für die zweite Convolutional Layer können dann 64 Filter, für die dritte Convolutional Layer 128 Filter, für die vierte Convolutional Layer 256 Filter und für die fünfte Convolutional Layer 512 Filter verwendet werden.

Ferner kann nach jeder Convolutional Layer, insbesondere für die ersten drei Convolutional Layer, eine Pooling Operation vorgesehen werden. Beim Pooling erfolgt eine Reduktion von Daten, insbesondere z.B. über Max-Pooling oder Mean-Pooling. Beim Max-Pooling wird aus einer vorgegebenen Anzahl an Neuronen-Aktivitäts-Werten, z.B. Aktivitäts-Werten einer Matrix von 2 x 2 Neuronen, nur die stärkste Aktivität weiterverwertet. In diesem Fall erfolgt somit eine Datenreduktion um 75 Prozent bzw. auf ein Viertel der Bilddaten. Die übrigen Werte werden verworfen. Beim Mean-Pooling erfolgt eine Datenreduktion durch Mittelwertbildung der Neuronen-Aktivitäts-Werten. Werden mehr als drei Convolutional Layer vorgesehen, kann insbesondere nach der dazu gehörigen Pooling Operation von weiteren Pooling Operationen für nachfolgende Convolutional Layer abgesehen werden, um die Daten nicht zu stark zu reduzieren.

Anschließend können die nach der Convolutional Layer und Pooling Operation erhaltenen Werte in einen 1D Vektor überführt werden, was auch als Flattening bezeichnet wird, und mittels eines klassischen neuronalen Netzes klassifiziert werden. Dieser Teil des Netzes kann insbesondere zwei Hidden Layer bzw. versteckte Ebenen aufweisen. Typischerweise kann ferner eine Softmax-Funktion zur Anwendung kommen, mittels der eine normalisierte Wahrscheinlichkeitsverteilung für die ermittelten Klassen durchgeführt wird.

Im Hinblick auf die Bestimmung von Hyperparametern des künstlichen neuronalen Netzwerks, d.h. der auszuwählenden Netzwerk-Topologie, kann ein Gaussian Process im Hinblick auf eine entsprechende Optimierungsfunktion für das Netzwerk zum Einsatz kommen. Als Hyperparameter können insbesondere vorgesehen werden: die Art der Aktivierungsfunktion, wie z.B. relu-Funktion, Tangens-Funktion, Sigmoid-Funktion, etc.., die Netztiefe, d.h. die Anzahl Layer, der Größe der Pixelumgebung, sofern berücksichtigt, sowie bspw. die Neuronenanzahl und die Anzahl der Hidden Layers des dem den Convolutional Layern nachgeordneten voll vernetzte neuronalen Netzwerks. Auch kann die Lernrate bzw. die learning rate berücksichtigt werden.

Gemäß einer weiteren Ausgestaltung des Verfahrens erfolgt die Klassifikation pixelweise auf Basis des Fusionsbilds der Emitter-Strukturen, wobei für die Klassifikation des jeweiligen Pixels eine Pixelumgebung im Fusionsbild berücksichtigt wird, wobei die zu berücksichtigende Pixelumgebung mittels eines Abstands zum zu klassifizierenden Pixel oder mittels eines Bereichs um das zu klassifizierende Pixel festgelegt wird.

Vorzugsweise ist für die pixelweise Klassifikation die Größe und Form der jeweils zu berücksichtigenden Pixelumgebung konstant. Die Pixelumgebung kann jedoch auch variabel, insbesondere pixelweise variabel, ausgestaltet werden. Bspw. können für verschiedene Filter verschieden definierte Pixelumgebungen verwendet werden. Die Pixelumgebung kann bspw. kreisförmig ausgestaltet sein. Die Pixelumgebung um das zu klassifizierende Pixel wird dann durch einen Abstandsradius ausgehend vom zu klassifizierenden Pixel begrenzt. Die zu berücksichtigende Pixelumgebung kann jedoch auch andere Formen aufweisen, bspw. eine rechteckige, quadratische oder eine beliebige vieleckige Form, aufweisen. Als besonders geeignet haben sich quadratische Pixelumgebungen mit einer Größe von 32 mal 32 Pixeln bzw. von 48 mal 48 Pixeln um das zu klassifizierende Pixel erwiesen.

Gemäß einer weiteren Ausgestaltung des Verfahrens erfolgt die Klassifikation auf Grundlage eines aus dem Fusionsbild ausgewählten Pixelbereichs, wobei der Pixelbereich mittels eines künstlichen neuronalen Netzes, insbesondere einem Encoder-Decoder-Netzwerk, ermittelt wird, und eine pixelweise oder pixelbereichsweise Klassifikation auf Basis des ermittelten Pixelbereichs erfolgt.

Ein Pixelbereich umfasst mehrere, in der Regel räumlich benachbarte Pixel aus dem Fusionsbild und fasst diese zu einer Analyseregion zusammen. Die Generierung von entsprechenden Pixelbereichen stellt eine beispielhafte oben erwähnte Vorverarbeitung des Fusionsbilds dar. Das Fusionsbild kann also in eine Mehrzahl, insbesondere Vielzahl, an sich nicht überschneidenden Pixelbereichen eingeteilt werden, welche dann klassifiziert werden.

Der zu klassifizierende Pixelbereich bzw. die zu klassifizierenden Pixelbereiche wird mittels eines entsprechend angelernten neuronalen Netzes, bspw. einem Encoder-Decoder-Netzwerk, ermittelt. Dieses ist vorzugsweise derart ausgestaltet, die für die Klassifikation wesentlichen Merkmale aus dem Fusionsbild extrahiert werden können. Mittels eines derartigen, anzulernenden neuronalen Netzes kann eine komprimierte Repräsentation, also ein encodiertes Bild, für das Fusionsbild generiert werden. Die Klassifikation erfolgt dann auf Grundlage dieser komprimierten Repräsentation des Fusionsbilds. Diese umfasst in diesem Fall, sofern diese pixelweise erfolgt, auch eine Decodierung.

Insbesondere kann bei einer Klassifikation eines Pixelbereichs eine Umgebung des Pixelbereichs vernachlässigt werden bzw. die Umgebung des Pixelbereichs wird für die Klassifikation nicht berücksichtigt.

Die Klassifizierung von Pixelbereichen des Fusionsbilds erlaubt eine Datenreduktion und eine schnellere pixelweise Klassifizierung für das Fusionsbild. Das Klassifikationsergebnis kann pixelweise vorliegen, d.h. jedem Pixel wird eine bestimmte Klasse zugeordnet. Es kann auch dem gesamten Pixelbereich eine bestimmte Klasse zugeordnet werden.

Für die Klassifikation auf Basis von Pixelbereichen, insbesondere die pixelweise Klassifikation auf Basis von Pixelbereichen, ist es von Vorteil, die Anzahl der Convolutional Layer deutlich zu erhöhen, bspw. auf mehrere 10 Convolutional Layer.

In einer weiteren Ausgestaltung des Verfahrens wird zwischen der Ermittlung der Klassifikation und der Erzeugung des Signals zur Ausgabe der ermittelten Klasse ein Verfahren zur Reduktion des, insbesondere örtlichen, Signalrauschens auf wenigstens ein Klassifikationsergebnis angewendet und das Signal zur Ausgabe auf Grundlage des rauschreduzierten Klassifikationsergebnisses erzeugt. Durch diese Nachbearbeitung der Klassifikation kann bspw. die Gesamtfläche je Defektklasse als die Anzahl aller Pixel der jeweiligen Klasse bestimmt werden. Auch kann hierdurch bspw. die Häufigkeit eines bestimmten Defekts ermittelt werden, oder auch die Ortsverteilung bzw. relative Position der bestimmter oder aller Defekte bestimmt werden.

Als Verfahren zur Reduktion des, insbesondere örtlichen, Signalrauschens können bspw. mathematische morphologische Operation zum Einsatz kommen. Insbesondere kann eine Erosion und Dilation wiederholt ausgeführt werden, was auch als Opening Operation bekannt ist, um das Rauschen zu reduzieren.

Vorteilhafterweise kann ein Ausgabesignal erzeugt werden, mittels dem wenigstens eine ermittelte Klasse auf einem Ergebnis-Bild der Emitter-Strukturen ortsaufgelöst dargestellt werden kann, vorzugsweise alle ermittelten Klassen auf einem Bild der Emitter-Strukturen ortsaufgelöst dargestellt werden können. Ein Ergebnis-Bild ist ein Bild in welchem der Emitter oder ein Teil des Emitters schematisch oder mit den Emitter-Strukturen dargestellt ist, auf welchem wenigstens eine Klasse ortsaufgelöst wiedergegeben ist. Das Ergebnisbild kann eine schematische Wiedergabe des Emitters oder eines Teils davon umfassen, ein Hellfeld-Bild, ein Dunkelfeld-Bild oder ein anderes beliebiges Bild des Emitters der eines Teils davon.

Insbesondere können die Emitter-Strukturen und die in dem Ergebnis-Bild dargestellte wenigstens eine Klasse, insbesondere alle im Rahmen der Klassifikation aufgefundenen Klassen, in SI-Einheit dargestellt werden. Hierzu erfolgt eine Kalibrierung der Pixelgröße auf SI-Einheiten.

Es kann eine Vielzahl von Emitter-Strukturen des Emitters oder der gesamte Emitter mit den vorliegenden Klassen in dem Ergebnis-Bild dargestellt werden. Hierdurch kann ein guter Überblick über die örtliche Verteilung der Klassen über den Emitter bereitgestellt werden. Bspw. kann auf diese Art und Weise auch ein Rückschluss einen fehlerhaften Fertigungsprozessschritt gezogen werden, welcher z.B. Kratzer auf dem Emitter verursacht.

Insbesondere kann aus den Einzelbildern von Emitter-Strukturen ein Ergebnis-Bild für eine Vielzahl an Emitter-Strukturen oder für den gesamten Emitter bereitgestellt werden. Dies kann bspw. als zusammengesetztes Ergebnis-Bild mit Emitter-Strukturen erfolgen, d.h. mit Emitter-Strukturen aus verschiedenen örtlichen Bereichen des Emitters, welche bei geeigneter Auflösung nicht auf ein einzelnes Hellfeld-Bild oder Dunkelfeld-Bild passen. Dies kann insbesondere dann erfolgen, wenn die Bilder der Emitter-Strukturen jeweils Mikroskop-Bilder sind. Ferner können insbesondere die ohnehin für die Klassifikation zugrundeliegenden Hellfeld-Bilder oder Dunkelfeld-Bilder für die Erzeugung eines zusammengesetzten Ergebnis-Bildes mit einem Bildbereich, der größer ist als derjenige des einzelnen Hellfeld- bzw. Dunkelfeld-Bilds, verwendet werden.

In einer weiteren Ausführungsvariante des Verfahrens erfolgt eine Klassifikation derart, dass wenigsten eine zweite Klasse jeweils einem bestimmten Defekt zugeordnet ist, wobei der jeweilige bestimmte Defekt aus folgender Gruppe von Defekten ausgewählt ist: Schnittkantendefekt, Materialdefekt, Planheitsdefekt, Oberflächendefekt. Vorzugsweise existieren neben der zweiten Klasse auch eine dritte, vierte, fünfte, etc.. Klasse, die jeweils einem bestimmten Defekt zugordnet sind. Dabei kann bspw. bei den genannten Defektarten auch noch weiter differenziert werden. So kann bspw. die Klasse der Oberflächendefekte weiter ausdifferenziert werden, z.B. in eine Klasse für "Verschmutzung", eine weitere Klasse für "Ausbrüche bzw. ausgebrochene Stellen", eine weitere Klasse für "Kratzer", eine weitere Klasse für "Flecken", eine weitere Klasse für "Staubpartikel", eine weitere Klasse für "Verbrennungen" usw., welche alle Oberflächendefekte darstellen. Auch können bspw. für Schnittkantendefekte mehrere Klassen vorgesehen werden, wie z.B. "Schnittkantenbrüche" oder "Abweichung von Soll-Schnittkante". Gleiches gilt in ähnlicher Weise für Materialdefekte. So kann bspw. eine Klasse vorgesehen werden für "nicht auskristallisiertes Material", eine weitere Klasse für "Materialeinschlüsse", eine weitere Klasse für "Versetzungen in der Kristallstruktur des Materials". Ferner kann eine Klasse für "Planheitsdefekte" vorgesehen werden, d.h. eine unerwünschte wellenförmige Ausbildung der Emitter-Struktur, z.B. aufgrund innerer Spannungen im Material.

Es kann durch Bereitstellung einer Mehrzahl bzw. Vielzahl an Klassen, insbesondere dritter, vierter, etc. Klassen eine detaillierte Differenzierung zwischen unterschiedlichen Defekten der Emitter-Struktur erfolgen. Ferner können diese auch, falls gewünscht, in bestimmte Defekttypen, z.B. Oberflächendefekte, Materialdefekte, etc., aggregiert bzw. zusammengefasst werden.

Die Aufgabe wird ebenfalls gelöst mittels einer Vorrichtung zur Durchführung eines Verfahrens zur automatischen Klassifikation von Emitter-Strukturen zur Erzeugung von Röntgenstrahlen, mit einer Schnittstelle zum Empfangen eines Hellfeld-Bilds der Emitter-Strukturen, eines Dunkelfeldbild der Emitter-Strukturen oder eines aus einem Hellfeld-Bild und einem Dunkelfeld-Bild der Emitter-Strukturen erzeugten Fusionsbilds, mit einer Recheneinheit, in welche maschinenlesbarer Programmcode ladbar ist, welcher bei dessen Ausführung die Durchführung des Verfahren nach einem der Ansprüche 1 bis 8 veranlasst, und mit einer Signalausgabe-Schnittstelle zur Ausgabe eines Signals, welches auf den mittels der Klassifikation ermittelten Klassen für die Emitter-Struktur basiert.

Optional kann die Vorrichtung ein Bildaufnahmesystem zur Aufnahme eines Hellfeld-Bilds und/oder eines Dunkelfeld-Bilds umfassen. Das Bildaufnahmesystem zur Aufnahme eines Hellfeld-Bilds und das Bildaufnahmesystem zur Aufnahme eines Dunkelfeld-Bilds können innerhalb eines Bildaufnahmesystems verwirklicht sein oder als separate Bildaufnahmesysteme ausgeführt sein. Im Falle von separaten Bildaufnahmesystemen ist jedoch sicherzustellen, dass im Wesentlichen kongruente Bilder der Emitter- Strukturen für das Hellfeld-Bild und das Dunkelfeld-Bild erfasst werden, so dass daraus ein geeignetes Fusionsbild ermittelbar ist.

Ferner kann die Vorrichtung optional auch eine Wiedergabeeinrichtung zur Wiedergabe des Ausgabesignals umfassen, welches auf der mittels der Klassifikation ermittelten Klasse für die Emitter-Struktur basiert, bspw. ein Display und/oder eine Sprachausgabevorrichtung.

Im Rahmen einer remote, also z.B. über das Internet und somit nicht lokal, durchgeführten Klassifikation, z.B. über eine Cloud- oder Web-Anwendung, ist es in der Regel ausreichend und erforderlich, wenn lediglich eine Schnittstelle für das Empfangen der Hellfeld-Bilder, der Dunkelfeld-Bilder oder des daraus bereits erzeugten Fusionsbilds bzw. der Fusionsbilder von der Vorrichtung umfasst ist. Die Schnittstelle dient der Bereitstellung der erforderlichen Daten für die Recheneinheit, damit die Klassifikation der Emitter-Struktur mittels der Recheneinheit auf Grundlage des Fusionsbilds ausgeführt werden kann. Eine derartige Schnittstelle ist ebenfalls bei "lokal betriebenen" Vorrichtungen vorhanden.

Die Aufgabe wird auch gelöst mittels eines Computerprogrammprodukts und/oder mittels eines maschinenlesbaren Programmcodes für eine Recheneinheit, welcher Steuerbefehle umfasst, welche bei deren Ausführung mittels einer Recheneinheit die Durchführung des Verfahrens nach einem der Ansprüche 1 bis 8 veranlassen.

Die Aufgabe wird ebenso gelöst mittels eines Speichermedium mit maschinenlesbarem Programmcode nach Anspruch 10.
Die Aufgabe wird auch gelöst mittels eines Verfahrens zur Wiedergabe, insbesondere Anzeige, einer Klassifikation einer Emitter-Struktur, wobei ein Signal zur Ausgabe, erzeugt mittels eines Verfahren nach einem der Ansprüche 1 bis 8, empfangen wird, wobei eine Wiedergabe der Emitter-Struktur und wenigstens einer der Emitter-Struktur zugeordneten Klasse auf Grundlage des empfangenen Signals zur Ausgabe erfolgt.

Die Aufgabe wird gleichfalls gelöst mittels einer Vorrichtung zur Wiedergabe, insbesondere Anzeige, einer Klassifikation einer Emitter-Struktur, umfassend eine Schnittstelle zum Empfangen eines Signals zur Ausgabe von einer Vorrichtung nach Anspruch 9, eine der Wiedergabevorrichtung zugeordnete Recheneinheit, in welche maschinenlesbarer Programmcode ladbar ist, welcher bei dessen Ausführung die Durchführung des Verfahren nach Anspruch 12 veranlasst, und umfassend eine Einrichtung zur Wiedergabe einer Emitter-Struktur und wenigstens einer der Emitter-Struktur zugeordneten Klasse auf Grundlage des empfangenen Signals zur Ausgabe.

Ebenso wird die Aufgabe gelöst mittels einer Steuereinrichtung eines ersten Computers, bspw. einem Client-Computer, insbesondere an einer Fertigungsstätte für Emitter, mit maschinenlesbarem Programmcode, welcher Steuerbefehle umfasst, die bei deren Ausführung ein Versenden eines Hellfeld-Bilds und eines Dunkelfeld-Bilds derselben Emitter-Struktur oder eines Fusionsbilds aus einem solchen Hellfeld-Bild oder Dunkelfeld-Bild an eine Vorrichtung nach Anspruch 9 veranlassen, wobei die Steuerbefehle ferner veranlassen, dass ein Verfahren nach einem der Ansprüche 1 bis 8 mittels einer Vorrichtung nach Anspruch 9 durchgeführt wird, und dass das von der Vorrichtung nach Anspruch 9 erzeugte Signal zur Ausgabe vom ersten Computer empfangbar ist.

Für das Veranlassen der Durchführung des Verfahrens kann es genügen, dass die Steuerbefehle die Durchführung des Verfahrens nach einem der Ansprüche 1 bis 8 nur mittelbar veranlassen, z.B. eine Anfrage auf Durchführung des Verfahrens an die Vorrichtung nach Anspruch 9 senden. Der Zeitpunkt der Durchführung des Verfahrens sowie die Kontrolle des Verfahrensablaufs kann auf Seiten der Vorrichtung 9 gesteuert erfolgen, insbesondere abhängig von vorhandenen Anfragen weiterer Clients und verfügbarer Ressourcen, insbesondere Rechenressourcen. Das mittels des Verfahrens nach einem der Ansprüche 1 bis 8 erzeugten Signals zur Ausgabe wird dann vom ersten Computer wieder empfangen. Dies kann durch eine Abfrage des ersten Computers bei der Vorrichtung nach Anspruch 9 veranlasst sein, z. B. ob das Signal zur Ausgabe zur übermittelten Anfrage bereits vorliegt und dann - abhängig vom Vorliegen des Signals zur Ausgabe - übermittelt werden. Alternativ kann die Vorrichtung nach Anspruch 9 dies an den ersten Computer, d.h. ohne dessen Anfrage nach Vorliegen des Signals zur Ausgabe, direkt versenden, bspw. sobald dieses vorliegt oder auch mit einer gewünschten Verzögerung, wobei z.B. eine EmpfangsSchnittstelle des ersten Computers derart angesteuert wird, dass diese das Signals zur Ausgabe von der Vorrichtung nach Anspruch 9 empfangen kann.

Eine beispielhafte Ausgestaltung der Erfindung wird anhand der nachfolgenden Figuren exemplarisch genauer erläutert. Es zeigen:
- FIG 1: eine schematische Darstellung einer Vorrichtung zur Durchführung einer Ausführungsform des Klassifikationsverfahrens,
- FIG 2: den schematischen Aufbau eines geeigneten Convolutional Neural Networks zur Durchführung einer Ausführungsform des Verfahrens,
- FIG 3: die schematische Darstellung eines Verfahrensablaufs für eine Ausführungsform des Klassifikationsverfahrens.

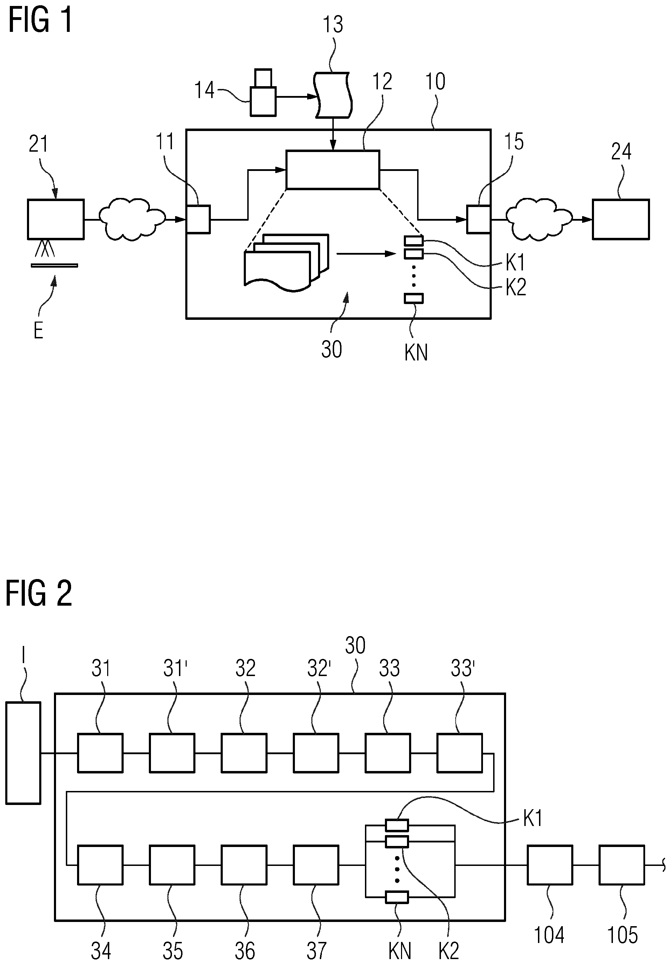

Fig 1 zeigt eine schematische Darstellung einer Vorrichtung 10, mittels welcher das Verfahren zur Bestimmung von Defekten für Emitter-Strukturen E in einer Cloudumgebung ausführbar ist. Das Verfahren wird somit bspw. von einem entsprechenden Cloud-Server 10 ausgeführt.

Zur Durchführung der Klassifikation von Emitter-Strukturen E im Hinblick auf das Vorliegen von Defekten ist zunächst ein Bild mit Emitter-Strukturen E bereitzustellen.

Hierzu wird mittels eines Bildaufnahmesystems 21, z.B. einem entsprechenden Mikroskop, ein Hellfeld-Bild und ein Dunkelfeld-Bild der zu klassifizierenden Emitter-Strukturen E aufgenommen. Es können ferner alle funktional relevanten Teil des Emitters mittels des Bildaufnahmesystems 21 in geeigneter Auflösung abgetastet bzw. abgerastert werden. Diese Bildaufnahmesystem 21 ist im Ausführungsbeispiel nicht Teil der Vorrichtung 10.

Wird das gesamte Verfahren zur Klassifikation einer Emitter-Struktur E lokal, z.B. in einer Fertigungsstätte für Emitter und nicht unter Einbindung einer Cloud, ausgeführt, so kann die Vorrichtung 10 auch das Bildaufnahmesystem 21 umfassen.

Vorliegend wird wenigstens ein Hellfeld-Bild und das Dunkelfeld-Bild derselben Emitter-Struktur E an eine Empfangsschnittstelle 11 der Vorrichtung 10 versendet. Ggf. können diese bereits vor Versendung an die Empfangsschnittstelle 11 der Vorrichtung 10 zu einem Fusionsbild kombiniert werden.

Das Fusionsbild aus Hellfeld-Bild und Dunkelfeld-Bild kann jedoch auch mittels der Vorrichtung 10 bzw. einer von der Vorrichtung 10 umfassten Recheneinheit 12 erzeugt werden.

Als Grundlage für die Klassifikation von Emitter-Strukturen E, welche mittels der Recheneinheit 12 erfolgt, wird das Fusionsbild herangezogen. Das Fusionsbild umfasst die Bildkanäle des Hellfeld-Bildes und des Dunkelfeld-Bildes der jeweiligen Emitter-Struktur E, also z.B. 6 Farbkanäle, nämlich die 3 R (Rot), G (Grün), B (Blau) Kanäle des Hellfeld-Bilds und die R, G, B Kanäle des Dunkelfeld-Bilds. Statt des RGB-Systems kann bspw. auch das CMYK-System zum Einsatz kommen. Dementsprechend verändert sich die Anzahl der Farbkanäle von drei auf vier bzw. von sechs auf acht für das Fusionsbild.

Mittels der Recheneinheit 12 ist ein maschinenlesbarer Programmcode 13 in den Arbeitsspeicher der Recheneinheit 12 ladbar. Der maschinenlesbare Programmcode 13 ist derart ausgestaltet, dieser bei dessen Ausführung die Durchführung der Klassifikation der Emitter-Strukturen E anhand des Fusionsbilds veranlasst. Der maschinenlesbare Programmcode 13 ist, bevor dieser von der Recheneinheit 12 geladen wird, auf einem Speichermedium 14 dauerhaft gespeichert und kann von diesem abgerufen bzw. geladen werden.

Der maschinenlesbare Programmcode 13 umfasst Steuerbefehle, welche die Nutzung eines künstlichen neuronales Netzes in Form eines Convolutional Neural Networks 30 umfassen. Dieses Convolutional Neural Networks 30 ist im Vorfeld für die Klassifikation von Emitter-Strukturen E mittels Fusionsbildern mit bekannten Emitter-Defekten bzw. Defekt-Klassen angelernt worden.

Dafür ist es nötig einen Datensatz aus Paaren von Emitter-Strukturen mittels Hellfeld-Bild und Dunkelfeld-Bild und den zugehörigen Klassen, insbesondere je Pixel, zu erstellen. In der Lernphase wertet das Convolutional Neural Network diese Datensätze aus, um so die Zusammenhänge zwischen den Eingangsdaten, also den Emitter-Strukturen des Fusionsbilds, und den Ausgangswerten, den Klassen, für die Emitter-Strukturen zu erlernen.

Insbesondere erfolgt das Anlernen des Netzwerks durch überwachtes Lernen bzw. supervised learning, wobei das Verfahren Stochastic Gradient Descent mit einer kategorischen Verlustfunktion verwendet wird, um den Anlernvorgang zu unterstützen. Es können auch andere Verlustfunktionen verwendet werden. Bspw. kann die geeignetste Verlustfunktion im Rahmen der Optimierung der Hyperparameter des verwendeten neuronalen Netzes bzw. Convolutional Neural Networks ermittelt werden. Die entsprechenden Gradienten werden über backpropagation ermittelt.

Sofern sich die Randbedingungen für die Analyse der Emitter-Struktur stark verändern, z.B. aufgrund eines Technologiewechsels, kann es erforderlich sein, weitere Lernvorgänge zur Adaption des Modells vorzusehen.

Bei der Anwendung des trainierten Convolutional Neural Networks 30, d.h. nach Abschluss des Trainings, erfolgt eine Klassifikation von als Fusionsbild vorliegenden Emitter-Strukturen E mittels des entsprechend trainierten Convolutional Neural Networks 30, ohne dass vorher festgelegte Klassen für diese Emitter-Strukturen E bekannt sind. Die für die jeweilige Emitter-Struktur E vorliegenden Klasse wird auf Grundlage des trainierten Convolutional Neural Networks 30 ermittelt. Für die Klassifikation kommt zudem eine Softmax-Funktion zum Einsatz, um eine normierte Verteilung der Klassen zu erhalten.

Das Fusionsbild wird mittels des trainierten Convolutional Neural Networks 30 pixelweise analysiert und zur Klassifikation jedes Pixels werden umliegende bzw. benachbarte Pixel in einem Bereich definierter Größe berücksichtigt. Dieses Convolutional Neural Network 30 ordnet jedem Pixel eine der vorher festgelegten Klassen K1, K2,..KN zu, wobei N eine ganzzahlige positive Zahl gleich oder größer 3, vorzugsweise zwischen 4 und 12, ist. Die Klassen können z.B. entsprechen: schlecht geführte Schnittkanten, ausgebrochene Schnittkante, nicht auskristallisierte Bereiche, wellige Bereiche, Kratzer, Fokuskopfausbruch, Verunreinigungen, Staub, verbrannte Stellen, Flecken, etc...

Insbesondere kann die Zuordnung derart erfolgen, dass eine Wahrscheinlichkeit ermittelt wird, mit der jedes Pixel in verschiedene Klassen fällt. Das jeweilige Pixel wird dann der Klasse zugeordnet, für welche die Klassifikation die höchste Wahrscheinlichkeit ermittelt hat.

Nach Bewertung aller Pixel mittels des Convolutional Neural Networks 30 erfolgt eine Nachbearbeitung, insbesondere Fusionsbild-übergreifend, zur Reduktion von örtlichem Signalrauschen durch Anwendung z.B. der Opening Operation, d.h. Erosion gefolgt von Dilation. Im so nachbearbeiteten Bild kann nun die Gesamtfläche je Defektklasse als die Anzahl aller Pixel der jeweiligen Klasse bestimmt werden. Auch können andere Kennwerte wie die Häufigkeit eines Defektes oder die relative Position der Defekte zueinander oder auf dem Emitter bestimmt werden.

Die Umrechnung von Pixel zu SI-Einheiten erfolgt z.B. anhand einer einmaligen Kalibrierung. Für diese wird ein Bild mit Marken fest definierten Abstands aufgenommen (z.B. Gitter mit Linienabstand 1mm) und der Abstand der Marken im Bild in Pixeln bestimmt, und so der Zusammenhang zwischen SI-Einheiten und Pixelgröße hergestellt.

Im Anschluss an die Klassifikation des Fusionsbilds wird ein Ausgabesignal erzeugt, welches dann über eine Signalausgabe-Schnittstelle 15, insbesondere nach Übermittlung aus der Cloud, auf einer Wiedergabevorrichtung 24, etwa einem Monitor, die z.B. in einer Fertigungsstätte für Emitter angeordnet ist, angezeigt werden kann.

Das dargestellte Bild erfasst verzugsweise unter anderem die Emitter-Strukturen E des gesamten Emitters und erlaubt so bspw. auch - neben einer Beschränkung der Betrachtung auf bestimmte bspw. vom Nutzer ausgewählte Emitter-Strukturen E - eine überblicksartige Erfassung der Defektverteilung und der örtlichen Verteilung der Defektklassen über den gesamten Emitter auf einem Ergebnis-Bild.

Auf Basis dieser örtlichen Verteilung der Klassen kann bspw. ein Zuschnitt des Emitters derart erfolgen, dass nur defektfreie Emitter-Strukturen E weiterverwertet werden und defektbehaftete Emitter-Strukturen E aus dem Prozess entfernt werden. Dies ist insbesondere dann möglich, wenn ein Emitter aus separaten Emitter-Strukturen E modular aufgebaut wird.

FIG 2 zeigt einen schematischen Aufbau eines Convolutional Neural Networks 30, welches für die Klassifikation von Emitter-Defekten Anwendung finden kann.

Ausgehend von einem Eingangsbild I, dem Fusionsbild, weist das Convolutional Neural Network 30 drei Convolutional Layer 31, 32 und 33 bzw. Faltungsebenen auf. Diese werden mittels entsprechender Filter erzeugt, die während des Trainingsvorgangs erlernt wurden. Dabei werden bspw. für die erste Convolutional Layer 31 zweiunddreißig Filter, für die zweite Convolutional Layer 32 vierundsechzig Filter und für die dritte Convolutional Layer 33 einhundertachtundzwanzig Filter verwendet. Dabei kommt für jede Convolutional Layer 31 bzw. 32 bzw. 33 eine relu Aktivierungsfunktion zum Einsatz, d.h. es werden nur solche Werte weitergegeben, die einen Schwellwert (in der Regel "0") überschreiten. Jeder Convolutional Layer 31, 32 bzw. 33 ist eine Pooling Operation 31', 32' bzw. 33' nachgeordnet. Dort wird nach dem Max- Pooling Verfahren nur der Maximalwert des Filters, bspw. einer 2x2 Matrix, nach der jeweils durchgeführten Faltung weiterverwendet. Dabei wird die Bildgröße auf ein Viertel reduziert, d.h. drei Werte werden verworfen und ein Wert wird weiterverwertet.

Nach dem dritten Pooling 33' erfolgt ein sogenanntes Flattening 34, d.h. die Daten nach dem dritten Pooling 33' werden in einen 1D Vektor überführt. Dieser 1D Vektor wird mittels eines klassischen neuronalen feed-forward Netzwerks klassifiziert. Hierzu kommt eine erste Hidden Layer 35 bzw. eine erste versteckte Ebene und eine zweite Hidden Layer 36 bzw. eine zweite versteckte Ebene zum Einsatz, die jeweils voll verbunden bzw. "fully connected" mit der davor und dahinter angeordneten Ebene sind. Die erste Hidden Layer 35 weist vorzugsweise 32 Neuronen auf, die zweite Hidden Layer 36 weist vorzugsweise 8 Neuronen auf, insbesondere mit einer jeweils nachgelagerten Aktivierungsfunktion.

Der zweiten Hidden Layer 36 folgt eine Output Layer 37 bzw. Ausgabe-Ebene nach. Diese hat bspw. 4 Neuronen, wobei jedes Neuron einer Klasse entspricht. Ferner erfolgt mittels einer Softmax-Funktion eine Normierung der Klassen. Es liegt somit nun eine vom Convolutional Neural Network 30 vorgenommene Klassifikation für die analysierten Emitter-Strukturen vor. Die Anzahl der Neuronen kann abhängig von der Anzahl der gewünschten Klassen auch erhöht werden, z.B. auf 8 oder 10. In diesem Fall kann die Anzahl der Neuronen der ersten und zweiten Hidden Layer erhöht werden. So können für die erste Hidden Layer bspw. 256 bzw. 128 Neuronen vorgesehen werden und für die zweite Hidden Layer 128 bzw. 64 Neuronen.

Die Wahl einer höheren Anzahl an Klassen hat den Vorteil, dass diese nach der Klassifikation noch in bestimmte Über-Kategorien, wie z.B. Oberflächendefekte, aggregiert bzw. zusammengefasst werden können. Wird nur eine geringe Anzahl an Klassen ermittelt, kann das Ergebnis nachträglich nicht weiter diversifiziert werden kann. Insofern gibt die Anzahl der Klassen die maximale Granularität der Ergebnis-Diversifikation vor.

Anschließend erfolgt ein Nachbearbeitungsschritt 104 des Klassifikationsergebnisses dahingehend, dass das Signalrauschen verringert wird. Hierzu können verschiedene morphologische mathematische Operationen zum Einsatz kommen. Vorzugsweise wird eine Opening Operation angewendet, welche eine Erosion des Signals und anschließende Dilation des Signals umfasst.

Anschließend wird in einem weiteren Schritt 105 ein Ausgangssignal, bspw. mittels der Recheneinheit 12, erzeugt, welches dann über den in Fig 1 gezeigten Signalausgabe-Schnittstelle 15 an den entsprechenden Empfänger versendet werden kann.

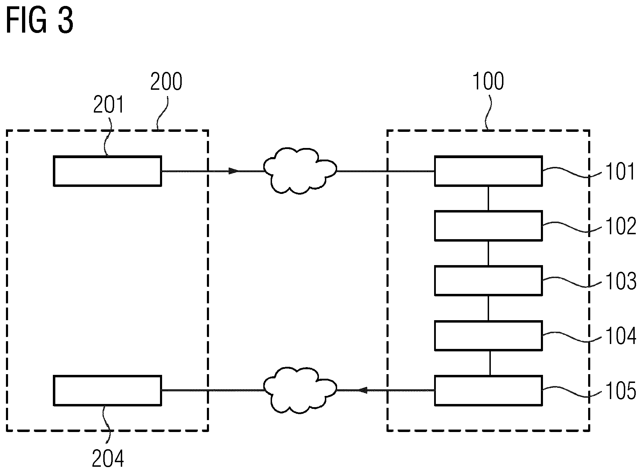

Fig 3 zeigte eine schematische Darstellung einer Ausführungsform des Verfahrens zur Klassifikation von Emitter-Strukturen im Hinblick auf Defekte.

Das Verfahren zur Klassifikation der Emitter-Strukturen im Hinblick auf Defektfreiheit bzw. Vorliegen eines Defekts bzw. einer bestimmten Defektart ist mit dem Bezugszeichen 100 bezeichnet. Dieses wird als Cloud-Anwendung ausgeführt und erhält die erforderlichen Bilddaten z.B. über eine Internetverbindung von einem ersten Computer 200, z.B. einem Client-Computer.

Zunächst wird in einem ersten Schritt 201 ein Hellfeld-Bild von Emitter-Strukturen aufgenommen. Anschließend erfolgt in einem nächsten Schritt 202 die Aufnahme eines Dunkelfeld-Bilds derselben Emitter-Strukturen. Vorzugsweise wird auf diese Art und Weise der gesamte Emitter - Abschnitt für Abschnitt - mit Hellfeld-Bild und Dunkelfeld-Bild erfasst. Die vorgenannten Bildaufnahmen der Emitter-Strukturen werden auf Seite eines ersten Computers, eines Clients, durchgeführt, d.h. an einem Ort, an dem die zu untersuchende Emitter-Struktur körperlich vorliegt.

Gemäß dem Ausführungsbeispiel der Fig 3 erfolgt die Erzeugung des Fusionsbilds in der Cloudumgebung. Hierzu wird in einem Verfahrensschritt 101 das Hellfeld-Bild und das Dunkelfeld-Bild über eine Empfangsschnittstelle von der Cloud-Anwendung empfangen.

In einem Verfahrensschritt 102 wird als vorbereitender Schritt für die Durchführung der nachfolgenden Klassifikation aus dem empfangenen Hellfeld-Bild und dem empfangenen Dunkelfeld-Bild für die jeweiligen Emitter-Strukturen ein Fusionsbild kombiniert, in welchem die Farbkanäle der jeweiligen Bilder im Bilddatensatz eines Bilds, dem Fusionsbild, enthalten sind.

Alternativ kann das Fusionsbild bereits auf der Client-Seite erzeugt und an die Cloudanwendung übermittelt werden, welches dann anstatt oder ggf. zusätzlich zu dem Hellfeld-Bild und/oder dem Dunkelfeld-Bild über die Empfangsschnittstelle empfangen wird.

Das Fusionsbild wird herangezogen, um die Klassifikation mittels dem Convolutional Neural Network, wie gemäß Fig 2 erläutert, durchzuführen. Diese Klassifikation der Emitter-Strukturen des Fusionsbilds erfolgt in einem Verfahrensschritt 103.

Nachdem das gesamte Bild, d.h. jedes Pixel des Fusionsbilds, klassifiziert wurde, wird in einem Verfahrensschritt 104 ein örtliches Rauschreduktionverfahren auf das Klassifikationsergebnis angewendet, so dass eine örtliche Verteilung der Klassen für die analysierten Emitter-Strukturen ermittelt werden kann.

In einem Verfahrensschritt 105 wird ein Ausgabesignal erzeugt, welches anschließend über eine Signalausgabe-Schnittstelle an den Client zurückübermittelt wird.

Auf Client-Seite erfolgt dann gemäß einem weiteren Verfahrensschritt 204 eine Darstellung der Klassifikation der analysierten Emitter-Strukturen auf einer Wiedergabevorrichtung, z.B. auf einem Monitor oder einer anderen Einrichtung zur Wiedergabe von Informationen. Insbesondere kann hier wenigstens ein Teil des Emitters auf dem Display dargestellt sein, wobei die örtliche Verteilung der Klassen auf dem Teil des Emitters graphisch wiedergegeben ist. Bspw. werden defektfreie Bereiche des Emitters mittels einer ersten Art von Markierung, z.B. einer ersten Farbe, wiedergegeben, während die weiteren defektbehafteten Klassen, insbesondere jeweils, mit einer anderen Art von Markierung, z.B. einer zweiten Farbe für alle defektbehafteten Emitter-Strukturen oder einer eigenen Farbe für jede defektbehaftete Klasse, dargestellt werden.

## Patentansprüche

1. Computer-implementiertes Verfahren (100) zur automatischen Klassifikation (103) von zur Emission von Elektronen für die Erzeugung von Röntgenstrahlen ausgebildeten Emitter-Strukturen (E), wobei die Klassifikation auf Grundlage eines herangezogenen Bilds einer Emitter-Struktur (E) erfolgt (103), wobei die Klassifikation eine erste Klasse (K1) und wenigstens eine zweite Klasse umfasst (K2, KN), wobei die erste Klasse (K1) einer im Wesentlichen defektfreien Emitter-Struktur (E) und die wenigstens eine zweite Klasse (K2, KN) einer defektbehafteten Emitter-Struktur entspricht,
**dadurch gekennzeichnet, dass** zur Klassifikation ein als Fusionsbild (I) aus einem Hellfeld-Bild, insbesondere aus einem Hellfeld-Mikroskop-Bild, und einem Dunkelfeld-Bild, insbesondere einem Dunkelfeld-Mikroskop-Bild, ausgestaltetes Bild (102) herangezogen, insbesondere empfangen, wird und die Klassifikation (103) der Emitter-Strukturen (E) in die erste und die wenigstens zweite Klasse (K1, K2, KN) anhand des Fusionsbilds (I) mittels eines zur Klassifikation (103) der Emitter-Struktur (E) trainierten künstlichen neuronalen Netzwerks (30) zur Klassifikation (103) der Emitter-Struktur (E) erfolgt, wobei ein Signal zur Ausgabe der mittels der Klassifikation (103) ermittelten Klassen (K1, K2, KN) für die Emitter-Strukturen (E) erzeugt (105) wird.

2. Verfahren nach Anspruch 1,
wobei die Klassifikation (103) mittels eines zur Klassifikation der Emitter-Struktur (E) trainierten tiefen neuronalen Netzes (30), insbesondere eines Convolutional Neuronal Networks (30), erfolgt.

3. Verfahren nach Anspruch 1 oder 2,
wobei zur Klassifikation (103) eine Mehrzahl an Filtern angewendet werden, wobei die Filter mittels des Trainingsprozesses des neuronalen Netzwerks (30), insbesondere des Convolutional Neural Networks (30), erlernt sind.

4. Verfahren nach einem der vorhergehenden Ansprüche,
wobei die Klassifikation (103) pixelweise auf Basis des Fusionsbilds (I) der Emitter-Strukturen (E) erfolgt und für die Klassifikation (103) des jeweiligen Pixels eine Pixelumgebung des Fusionsbilds (I) berücksichtigt wird, wobei die zu berücksichtigende Pixelumgebung mittels eines vorgebbaren Abstands zum zu klassifizierenden Pixel oder mittels eines vorgebbaren Bereichs um das zu klassifizierende Pixel festgelegt wird.

5. Verfahren nach einem der Ansprüche 1 bis 3,
wobei die Klassifikation (103) auf Grundlage eines aus dem Fusionsbild (I) ausgewählten Pixelbereichs erfolgt, wobei der Pixelbereich mittels eines künstlichen neuronalen Netzes, insbesondere einem Encoder-Decoder-Netzwerk, ermittelt wird, und eine pixelweise oder pixelbereichsweise Klassifikation (103) auf Basis des ermittelten Pixelbereichs erfolgt.

6. Verfahren nach einem der vorhergehenden Ansprüche,
wobei zwischen der Ermittlung der Klassifikation (103) und der Erzeugung (105) des Signals zur Ausgabe der ermittelten Klasse ein Verfahren zur Reduktion des, insbesondere des örtlichen, Signalrauschens auf wenigstens ein ermitteltes Klassifikationsergebnis angewendet (104) wird und das Signal zur Ausgabe auf Grundlage des rauschreduzierten Klassifikationsergebnisses erzeugt (105) wird.

7. Verfahren nach einem der vorhergehenden Ansprüche,
wobei ein Ausgabesignal erzeugt (105) wird, auf dessen Grundlage wenigstens eine ermittelte Klasse auf einem Ergebnis-Bild der Emitter-Strukturen (E) ortsaufgelöst darstellbar ist, vorzugsweise alle ermittelten Klassen ortsaufgelöst darstellbar sind.

8. Verfahren nach einem der vorhergehenden Ansprüche,
wobei eine Klassifikation (103) derart erfolgt, dass wenigsten eine zweite Klasse (K2,KN) jeweils einem bestimmten Defekt zugeordnet ist, wobei der jeweilige bestimmte Defekt aus folgender Gruppe von Defekten ausgewählt ist: Schnittkantendefekt, Materialdefekt, Planheitsdefekt, Oberflächendefekt.

9. Vorrichtung (10) zur Durchführung eines Verfahrens (100) zur automatischen Klassifikation (103) von Emitter-Strukturen (E) zur Erzeugung von Röntgenstrahlen,
- mit einer Schnittstelle (11) zum Empfangen eines Hellfeld-Bilds der Emitter-Strukturen, eines Dunkelfeldbilds der Emitter-Strukturen oder eines aus einem Hellfeld-Bild und einem Dunkelfeld-Bild erzeugten Fusionsbilds (I) der Emitter-Strukturen (E),
- mit einer Recheneinheit (12), in welche maschinenlesbarer Programmcode (13) ladbar ist, welcher bei dessen Ausführung die Durchführung des Verfahren (100) nach einem der vorhergehenden Ansprüche veranlasst, und
- mit einer Signalausgabe-Schnittstelle (15) zur Ausgabe eines Signals, welches auf der mittels der Klassifikation (103) ermittelten Klasse für die Emitter-Struktur (E) basiert.

10. Maschinenlesbarer Programmcode (13) für eine Recheneinheit (12), welcher Steuerbefehle umfasst, welche bei deren Ausführung mittels der Recheneinheit (12) die Durchführung des Verfahrens (100) nach einem der Ansprüche 1 bis 8 veranlassen.

11. Speichermedium (14) mit maschinenlesbarem Programmcode (13) nach Anspruch 10.

12. Verfahren zur Wiedergabe, insbesondere Anzeige, einer Klassifikation einer Emitter-Struktur (E), wobei ein Signal zur Ausgabe, erzeugt (105) mittels eines Verfahren (100) nach einem der Ansprüche 1 bis 8, empfangen wird, wobei eine Wiedergabe der Emitter-Struktur (E) und wenigstens einer der Emitter-Struktur (E) zugeordneten Klasse (K1, K2, KN) auf Grundlage des empfangenen Signals zur Ausgabe erfolgt (204).

13. Vorrichtung zur Wiedergabe (24), insbesondere Anzeige, einer Klassifikation einer Emitter-Struktur (E),
- mit einer Schnittstelle zum Empfangen eines Signals zur Ausgabe von einer Vorrichtung (10) nach Anspruch 9,
- mit einer Recheneinheit, in welche maschinenlesbarer Programmcode ladbar ist, welcher bei dessen Ausführung die Durchführung des Verfahren nach Anspruch 12 veranlasst, und
- mit einer Einrichtung zur Wiedergabe (24) einer Emitter-Struktur (E) und wenigstens einer der Emitter-Struktur (E) zugeordneten Klasse (K1, K2, KN) auf Grundlage des empfangenen Signals zur Ausgabe.

14. Steuereinrichtung eines ersten Computers mit maschinenlesbarem Programmcode, welcher Steuerbefehle umfasst, die bei deren Ausführung ein Versenden eines Hellfeld-Bilds und eines Dunkelfeld-Bilds derselben Emitter-Struktur (E) oder eines Fusionsbilds (I) aus einem solchen Hellfeld-Bild oder Dunkelfeld-Bild an eine Vorrichtung (10) nach Anspruch 9 veranlassen, wobei die Steuerbefehle ferner veranlassen, dass ein Verfahren (100) nach einem der Ansprüche 1 bis 8 mittels einer Vorrichtung (10) nach Anspruch 9 durchgeführt wird und dass das von der Vorrichtung (10) nach Anspruch 9 erzeugte Signal zur Ausgabe vom ersten Computer empfangbar ist.
